# EUROPEAN PATENT APPLICATION

(11) **EP 2 835 968 A1**
(43) Date of publication of application: **11.02.2015**
(21) Application number: 13769339.6
(22) Date of filing: 29.03.2013
(51) Int. Cl.: H04N 7/08

(54) **METHOD FOR PROVIDING LINKED BROADCAST SERVICE**

(30) Priority: 30.03.2012 KR 20120032967
(71) Applicant: Anypoint Media Group, Seoul 153-782 (KR)
(72) Inventor: BAEK, Wonjang, Seongnam-si Gyeonggi-do 463-731 (KR)
(74) Representative: Müller, Wolfram Hubertus
(86) International application number: PCT/KR2013/002648
(87) International publication number: WO 2013/147553

(57) **Abstract**

The present invention relates to a method for providing an associated service. According to the present invention, a program runtime event (PRE) information corresponding to an event generated while a digital broadcast program is being reproduced is transmitted to a receiver in which an application is being executed, and the application receives and displays additional information associated with the PRE information, thereby providing a service linked to the digital broadcast program.

## Description

### [TECHNICAL FIELD]

The present invention relates to a method of providing an associated service, and particularly, to a method of providing an associated service in which program runtime event (PRE) information corresponding to an event generated while a digital broadcast program is being reproduced is transmitted to a receiver in which an application is being executed, and the application receives and displays additional information associated with the PRE information, thereby providing an associated service linked to the digital broadcast program.

### [BACKGROUND ART]

A broadcast associated service is a service in which additional information associated with a broadcast program is displayed and provided on a part of a broadcast screen. In a broadcast associated service in the related art, an application including the additional information is embedded in a broadcast signal in the form of carousel and transmitted to a receiver via a broadcast network (in-band method).

An application according to the broadcast associated service in the related art includes additional information linked to a corresponding broadcast program in the application. For example, in a movie program, an application includes information on clothes or accessories worn by a main character at a specific time of the movie program and the like.

However, when the application includes the additional information, there are problems in that a size of the application increases and much time is consumed when the application is transmitted using an in-band method.

In addition, in the application according to the broadcast associated service in the related art, it is difficult to provide additional information linked to a live program. Since a time delay occurs when the application including the additional information is transmitted using the in-band method, it is difficult to timely provide additional information to the live program.

When a professional baseball broadcast is exemplified, since information on records between players including a batter who is currently at bat and a pitcher is difficult to know before the game proceeds, it is difficult to provide the information in real time.

### [DISCLOSURE]

### [TECHNICAL PROBLEM TO BE SOLVED]

In view of the above-described problems, the present invention provides a method of providing an associated service in which PRE information corresponding to an event generated while a digital broadcast program is being reproduced is transmitted to a receiver in which an application is being executed, and the application receives and displays additional information associated with the PRE information, thereby providing a associated service linked to the digital broadcast program.

### [TECHNICAL SOLUTION]

According to an aspect of the present invention, there is provided a method of providing an associated service performed in a digital broadcast system. The method includes (a) receiving a digital broadcast program; (b) executing an application associated with the digital broadcast program; (c) transmitting to a receiver executing the application a program runtime event information corresponding to an event generated during a playback of the digital broadcast program; (d) analyzing the program runtime event information, and receiving an additional information associated with the program runtime event information; and (e) processing and displaying the additional information.

The program runtime event information may include metadata.

The step (d) may include (d-1) searching for the additional information using the metadata; and (d-2) receiving the additional information found in the step (d-1).

The program runtime event information includes a time information displaying the additional information.

The program runtime event information includes an URL information corresponding to the additional information.

The step (c) may include transmitting the program runtime event information to the receiver via a communication network.

The step (c) may include transmitting the program runtime event information to the receiver via a broadcast network.

The step (d) may include receiving the additional information via a communication network.

The additional information may include first additional information and second additional information, and wherein the step (d) includes: (d-1) receiving the first additional information via a broadcast network; and (d-2) receiving the second additional information via a communication network.

The step (e) may include displaying at least one of the first additional information and the second additional information.

The method may further include storing the additional information received in the step (d).

The step (b) may include r receiving the application via a communication network and executing the application.

### [ADVANTAGEOUS EFFECTS]

In the method of providing an associated service according to the present invention, it is possible to provide a relatively large amount of additional information.

In the broadcast associated service in the related art, since the application including additional information is transmitted using the in-band method, there were many limitations of a size of additional information. However, in the method of providing an associated service according to the present invention, since additional information associated with PRE information may be separately received and displayed via the communication network, it is possible to provide a relatively large amount of additional information.

In addition, in the method of providing an associated service according to the present invention, it is possible to provide dynamic additional information linked to a live program. The application does not include predetermined additional information, but additional information associated with PRE information is received and provided in real time. Therefore, it is possible to provide dynamic additional information linked to the live program.

### [DESCRIPTION OF DRAWINGS]

FIG. 1 is a block diagram illustrating a digital broadcast system in which a method of providing an associated service according to the present invention is performed.
FIG. 2 is a flowchart illustrating a method of providing an associated service according to the present invention.
FIG. 3 is a flowchart illustrating exemplary steps S300 and S400 in the method of providing an associated service according to the present invention.
FIG. 4 is a flowchart illustrating exemplary steps S400 and S500 in the method of providing an associated service according to the present invention.

### [BEST MODE]

Hereinafter, exemplary embodiments of a method of providing an associated service according to the present invention will be described in detail with reference to the accompanying drawings.

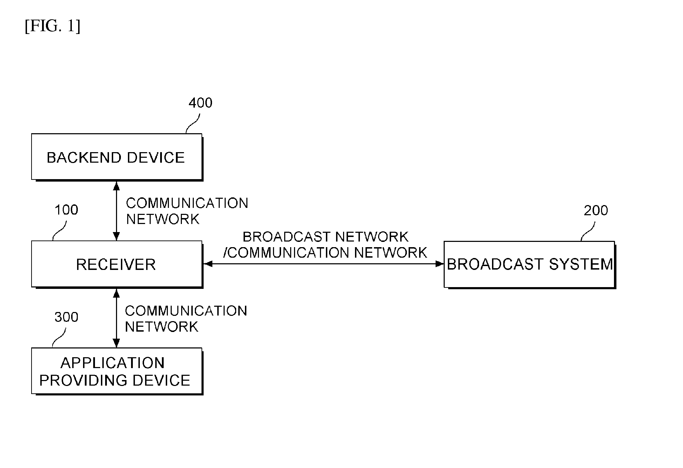

FIG. 1 is a block diagram illustrating a digital broadcast system in which a method of providing an associated service according to the present invention is performed.

As illustrated in FIG. 1, the digital broadcast system according to the present invention includes a receiver 100, a broadcast system 200, an application providing device 300, and a backend device 400.

The receiver 100 receives a digital broadcast program from the broadcast system 200 via a broadcast network or a communication network. In addition, the receiver 100 executes an application linked to the received digital broadcast program.

The application associated with the digital broadcast program is an application performed in connection with the digital broadcast program. For example, when the application is linked to a professional baseball broadcast, the application may provide information on a batter who is currently at bat and a pitcher. In addition, the application may be provided in connection with a specific channel as well as a specific program.

The receiver 100 may receive the application via a communication connection (communication network) with an external device. When the receiver 100 receives the application via the communication network, the application may be more quickly received than that of the broadcast network. Specifically, the application providing device 300 may transmit the application to the receiver 100 via the communication network in response to a request from the receiver 100.

The broadcast system 200 transmits a digital broadcast signal to the receiver 100. The broadcast system 200 may be managed by digital terrestrial operators, digital cable broadcast operators, IPTV operators, and the like.

The application providing device 300 stores a plurality of applications and transmits the application to the receiver 100. When the receiver 100 requests a specific application among the plurality of applications, the application providing device 300 transmits a corresponding application to the receiver 100. The application providing device 300 is preferably managed by digital broadcast operators or manufacturers of the receiver 100, but may be managed by other operators such as platform operators.

The backend device 400 provides information (for example, additional information) that is additionally necessary to execute the application. According to a method of providing a broadcast associated service in the related art, additional information is included in the application and transmitted using an in-band method. However, in the present invention, the backend device 400 that is separately provided may provide additional information. The backend device 400 may store additional information linked to the digital broadcast program, PRE information, extended electronic program guide (EPG) information, additional closed caption (CC) information, and the like, and transmit the information to the receiver 100. The extended EPG information is information on broadcast channels and programs, and includes information that is more detail than EPG information in the related art.

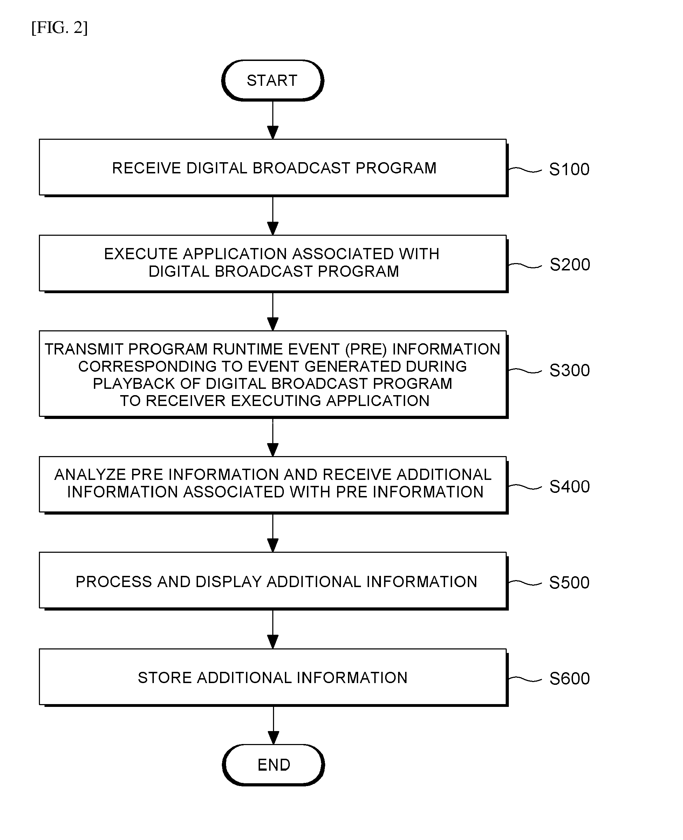

FIG. 2 is a flowchart illustrating a method of providing an associated service according to the present invention.

As illustrated in FIG. 2, first, a digital broadcast program is received (S100).

Specifically, the receiver 100 receives the digital broadcast program from the broadcast system 200 via the broadcast network or the communication network.

The digital broadcast program may be provided by operators who operate a digital terrestrial broadcast, a digital cable broadcast, a digital satellite broadcast, over the top (OTT) services, or Internet protocol television (IPTV) services.

Next, an application linked to the digital broadcast received in step S100 program is executed (S200).

For example, when a professional baseball broadcast starts in a channel that is being provided by the receiver 100, an application linked to a professional baseball broadcast program is executed.

In addition, the application may be executed in connection with the channel as well as the program.

For example, in an application linked to a home shopping channel, when a user changes the channel to the home shopping channel, a corresponding application may be executed.

Next, PRE information corresponding to an event generated during a playback of the digital broadcast program is transmitted to the receiver 100 in which the application is being executed (S300).

The event indicates generation of an event that requires additional information to be provided in the digital broadcast program being reproduced.

For example, when the professional baseball broadcast program is provided, an event of changing a batter, a pitcher, and the like may be generated.

When the event is generated during a playback of the digital broadcast program, PRE information corresponding to the generated event is transmitted to the receiver executing the application.

The PRE information corresponds to the generated event and provides additional information linked to the digital broadcast program.

For example, when an event of changing a batter is generated while the professional baseball broadcast program is being reproduced, the broadcast system 200 may transmit PRE information including information on the changed batter. When the information on the changed batter is identified, additional information of his or her record against a pitcher and the like may be provided in real time.

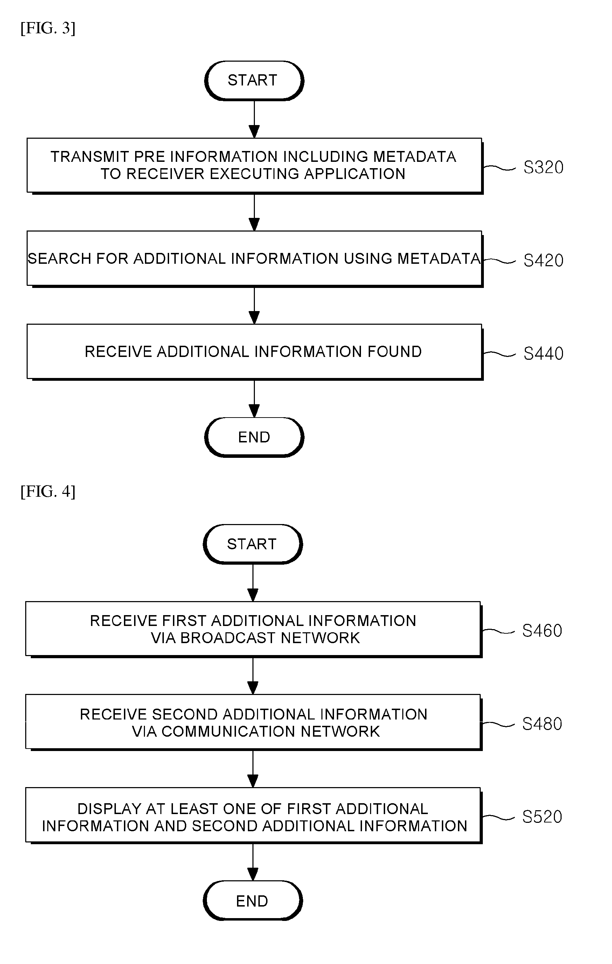

FIG. 3 is a flowchart illustrating a case in which PRE information includes metadata in the method of providing an associated service according to the present invention.

As illustrated in FIG. 3, PRE information including metadata may be transmitted to the receiver executing the application (S320).

The metadata is data about additional information linked to the digital broadcast program. Specifically, the metadata serves as an index for searching for additional information and may include information on a display method of the additional information. The application may search additional information stored in the receiver 100 or the external device for additional information associated with PRE information using the metadata (S420).

In addition, the PRE information may include uniform resource locator (URL) information corresponding to the additional information.

The URL information is information indicating a position in which the additional information is stored. For example, when additional information stored in the external device is necessary, the application may obtain the additional information using the URL. In this case, there is no need to search for the additional information, but only additional information designated by the operator is displayed.

In addition, the PRE information may include time information displaying additional information. Specifically, the time information may include an accurate time at which the additional information is displayed or a range of a time in which the additional information is displayed. The application may allow the additional information to be displayed at an accurate time or in a range of a time using the time information included in the PRE information.

In addition, when the program is not a live program (for example, a movie program), time information may be received in advance and stored.

The receiver 100 may receive PRE information through the communication connection with the external device. When the PRE information is received via the communication network, it is possible to prevent a time delay occurring when a signal is converted in the broadcast network.

In a broadcast program that does not require a real-time service such as a movie, the receiver 100 may receive PRE information via the broadcast network in addition to the communication network. In this case, since the broadcast network has a slower transmission rate than the communication network, it is preferable that the PRE information be received in advance.

Referring again to FIG. 2, the application analyzes the PRE information and receives additional information associated with the PRE information (S400).

Since the PRE information is information for providing additional information linked to the digital broadcast program, additional information associated with PRE information may be received by analyzing the PRE information. Specifically, when the application receives the PRE information, an event corresponding to the PRE information is generated and additional information may be received using metadata included in the PRE information and the like.

For example, when a batter is changed during a professional baseball broadcast, the PRE information may include information on the changed batter and a current pitcher. The application may receive additional information of a career batting average of the batter, a record against the current pitcher, and the like using the information on the batter and the pitcher included in the PRE information.

In addition, in step S400, the application may receive additional information via the communication network.

In the broadcast associated service, it is important to provide additional information in real time, and it is difficult to quickly provide additional information via the broadcast network. In addition, when a large amount of additional information is provided via the broadcast network, much time is consumed.

In the method of providing an associated service according to the present invention, since the application receives additional information via the communication network, it is possible to quickly receive a large amount of additional information.

FIG. 4 is a flowchart illustrating exemplary steps S400 and S500 in the method of providing an associated service according to the present invention.

As illustrated in FIG. 4, the application may receive first additional information via the broadcast network (S460), and receive second additional information via the communication network (S480). When the application requires several types of additional information, the application may receive additional information via the broadcast network or the communication network according to a size of additional information, necessity of real time, and the like.

For example, in a professional baseball broadcast program, two teams' season record against each other, a season record of a starting pitcher, and the like may be previously identified before the game starts. On the other hand, after the professional baseball broadcast starts, information on a batter, a time at bat, changes of the pitcher and the batter, and the like should be provided in real time.

Therefore, information that may be known in advance may be received as the first additional information via the broadcast network, and information that requires real time delivery may be received as the second additional information via the communication network.

In addition, the application may receive divided additional information based on a scene factor of the broadcast program. In particular, when a size of the additional information is large, the application receives divided additional information based on the scene factor. Therefore, it is possible to alleviate limitations of a transmission time and resources.

Referring again to FIG. 2, the application processes and displays additional information (S500).

The application that has received the additional information in step S400 displays the additional information on a screen and provides the additional information to the user. In addition, when the PRE information includes time information, the application may display the additional information according to the time information.

As illustrated in FIG. 4, when the application receives the first additional information and the second additional information in steps S460 and S480, the application may display at least one of the first additional information and the second additional information (S520).

For example, in the professional baseball broadcast program, information on two teams' record against each other and the like that may be known in advance may be displayed as the first additional information before the game starts or when the game starts. After the professional baseball game starts, information on a record of a current batter and pitcher against each other determined in real time and the like may be displayed as the second additional information according to progress of the game.

The application may store the additional information received in step S400 (S600).

The application may quickly provide the additional information when the stored additional information is necessary later. For example, in a movie in which predetermined additional information is provided, the application may quickly provide additional information when the movie is provided again.

Although the embodiments of the present invention have been described in detail, these are only examples of the present invention. Various modifications can be made by those skilled in the art without departing from the spirit and scope of the present invention.

Accordingly, the embodiments disclosed in this specification should be considered in a descriptive sense only and not for limiting the present invention. The spirit and scope of the present invention are not limited to these embodiments. The scope of the present invention should be interpreted by the appended claims and encompasses all equivalents falling within the scope of the appended claims.

### [INDUSTRIAL APPLICABILITY]

In the method of providing an associated service according to the present invention, it is possible to provide a relatively large amount of additional information.

In the broadcast associated service in the related art, since the application including additional information is transmitted using the in-band method, there were many limitations of a size of additional information. However, in the method of providing an associated service according to the present invention, since additional information associated with program runtime event (PRE) information may be separately received and displayed via the communication network, it is possible to provide a relatively large amount of additional information.

In addition, in the method of providing an associated service according to the present invention, it is possible to provide dynamic additional information linked to a live program. The application does not include predetermined additional information, but additional information associated with PRE information is received and provided in real time. Therefore, it is possible to provide dynamic additional information linked to the live program.

## Claims

1. A method of providing an associated service performed in a digital broadcast system, the method comprising:
(a) receiving a digital broadcast program;
(b) executing an application associated with the digital broadcast program;
(c) transmitting to a receiver executing the application a program runtime event information corresponding to an event generated during a playback of the digital broadcast program;
(d) analyzing the program runtime event information, and receiving an additional information associated with the program runtime event information; and
(e) processing and displaying the additional information.

2. The method according to claim 1, wherein the program runtime event information includes metadata.

3. The method according to claim 2, wherein the step (d) includes:
(d-1) searching for the additional information using the metadata; and
(d-2) receiving the additional information found in the step (d-1).

4. The method according to claim 1, wherein the program runtime event information includes a time information displaying the additional information.

5. The method according to claim 1, wherein the program runtime event information includes an URL information corresponding to the additional information.

6. The method according to claim 1, wherein the step (c) includes transmitting the program runtime event information to the receiver via a communication network.

7. The method according to claim 1, wherein the step (c) includes transmitting the program runtime event information to the receiver via a broadcast network.

8. The method according to claim 1, wherein the step (d) includes receiving the additional information via a communication network.

9. The method according to claim 1, wherein the additional information includes first additional information and second additional information, and wherein the step (d) includes:
(d-1) receiving the first additional information via a broadcast network; and
(d-2) receiving the second additional information via a communication network.

10. The method according to claim 9, wherein the step (e) includes displaying at least one of the first additional information and the second additional information.

11. The method according to claim 1, further comprising storing the additional information received in the step (d).

12. The method according to claim 1, wherein the step (b) includes receiving the application via a communication network and executing the application.
